# EUROPEAN PATENT SPECIFICATION

(11) **EP 2 244 339 B1**
(45) Date of publication and mention of the grant of the patent: **27.03.2019**
(21) Application number: 10160766.1
(22) Date of filing: 22.04.2010
(51) Int. Cl.: H01S 3/08, H01S 3/107, H01S 3/11, H01S 3/0941, H01S 3/16, H01S 3/13

(54) **Mode-locked solid-state laser apparatus**
Modengekoppelte Festkörperlaservorrichtung
Appareil laser à l'état solide à modes synchronisés

(30) Priority: 24.04.2009 JP 2009106148
(43) Date of publication of application: 27.10.2010
(73) Proprietor: Fujifilm Corporation, Minato-ku Tokyo (JP)
(72) Inventor: Yamazoe, Shogo, Kanagawa-ken (JP)
(74) Representative: Klunker IP Patentanwälte PartG mbB

(56) References cited:
- US-A1- 2005 074 038
- US-A1- 2005 185 682
- US-A1- 2009 086 772

## Description

### BACKGROUND OF THE INVENTION

### Field of the Invention

The present invention relates to a mode-locked solid-state laser apparatus enabling efficient, short-pulse generation and achieving high extraction efficiency.

### Description of the Related Art

Since the ultrashort-pulsed light having the pulse width on the order of picoseconds to femtoseconds has extremely great peak power, the ultrashort-pulsed light can cause nonlinear optical effects such as induction of two-photon absorption, second harmonic generation (SHG), and coherent anti-Stokes Raman scattering (CARS), so that the nonlinear optical effects caused by the ultrashort-pulsed light are expected to be used in various fields.

One of the techniques for generating ultrashort-pulsed light is the mode locking, in which a solid-state laser medium arranged in a resonator is excited with a semiconductor laser or the like, and the phases of a number of longitudinal modes oscillating in the resonator are synchronized. The laser apparatuses which generate pulsed laser by mode locking are called mode-locked laser apparatuses. Currently, the Spectra-Physics® Tsunami® laser (available from Newport Corporation), the Chameleon™ laser (available from Coherent Inc.), and others are widely known, commercially available mode-locked laser apparatuses. (Spectra-Physics® and Tsunami® are registered trademarks of Newport Corporation, and Chameleon™ is a trademark of Coherent Inc.) The commercially available mode-locked laser apparatuses are configured to have great resonator lengths (as great as approximately 2 meters) in order to increase the peak power. Therefore, the commercially available mode-locked laser apparatuses have a large, complex resonator structure constituted by many optical components for reflecting light a plurality of times . In addition, since the commercially available mode-locked laser apparatuses mainly use a Ti: Sapphire crystal as the solid-state laser medium, and need a solid-state laser source as an excitation light source for exciting the Ti:Sapphire crystal, the commercially available mode-locked laser apparatuses are very large and expensive. Further, the outputs of the commercially available mode-locked laser apparatuses are so unstable that oscillations of the commercially available mode-locked laser apparatuses stop in several weeks unless a feedback function for optimizing a resonator mirror according to the output variations and stabilizing the output is added.

One of the causes of the increase in the complexity of the resonator structure and the instability of the output is the great resonator length (as great as approximately 2 meters). In the case where the resonator length is great, the resonator is required to be folded for accommodating the resonator in a certain volume, so that the resonator structure becomes complex. In addition, in the case where the resonator length is great, the optical axis of the resonator greatly moves when one or more optical components (such as mirrors) constituting the resonator subtly move due to the variations in the environment such as the temperature and the humidity, so that the output becomes unstable.

Further, small-sized linear ultrashort-pulse lasers have been proposed in U.S. Patent No. 7,106,764 (hereinafter referred to as USP 7106764), Japanese Unexamined Patent Publications No. 11(1999)-168252 (hereinafter referred to as JP11-168252A) and U.S. Patent No. 7,693,192 (hereinafter referred to as USP 7693192). Specifically, USP 7106764 discloses a mode-locked solid-state laser apparatus the size of which is reduced by realizing a resonator by a curvature mirror formed on an end face of a solid-state laser medium and a semiconductor saturable absorbing mirror (SESAM) arranged on the other end face of the solid-state laser medium. JP11-168252A discloses a mode-locked small-sized solid-state laser apparatus the size of which is reduced by reduction of the number of optical components, and the number reduction is realized by forming a saturable absorbing mirror on a solid-state laser medium by coating, and arranging a negative-dispersion mirror to have a function of an output mirror. USP 7693192 discloses a linear mode-locked solid-state laser apparatus constituted by a negative-dispersion mirror and an SESAM which is arranged in close vicinity to a laser medium. In each of the above mode-locked solid-state laser apparatuses disclosed in USP 7106764, JP11-168252A, and USP 7693192, an SESAM needed for realizing the mode locking is arranged as one of the resonator mirrors. Each of the disclosed mode-locked solid-state laser apparatuses is an example of a linear mode-locked solid-state laser apparatus which can be constructed in a smaller size than the conventional mode-locked solid-state laser apparatuses in which light spots in the resonator are separately formed in the SESAM and the laser crystal, since each of the disclosed mode-locked solid-state laser apparatuses has an SESAM arranged in close vicinity to or contact with a laser crystal and is configured to produce a beam waist in the SESAM.

Furthermore, the assignee of the present application has realized a stable mode-locked solid-state laser apparatus of palmtop size, which can output ultrashort-pulsed light with the pulse energy of approximately 0.2 nJ and the peak power of approximately 10 W to 1 kW.

The fields in which application of the nonlinear optical effects caused by the ultrashort-pulsed light is expected include bio-imaging and biomachining. In particular, in order to realize application to biomachining, the pulse energy as great as several nanojoules to tens of nanojoules is required.

According to a commonly known technique for amplifying the energy and the peak power of ultrashort-pulsed light, an amplifying mechanism is arranged outside a laser oscillator. For example, in the case where the chirped pulse amplifier (CPA) is used, ultrashort-pulsed light outputted from a laser oscillator passes through a group-velocity dispersion control mechanism constituted by a grating and other elements in order to increase the pulse width, and then passes through an amplifying medium in order to increase the pulse energy. The ultrashort-pulsed light further passes through the group-velocity dispersion control mechanism again in order to compress the ultrashort-pulsed light so as to have the original pulse width. Thus, pulsed light having high energy and high peak power is obtained. However, the size of the entire system for outputting the ultrashort-pulsed light having high energy and high peak power by using the CPA as above is great, and the cost of the system high.

Furthermore, U.S. Patent Application Publication No. 20070104230 (hereinafter referred to as USP 20070104230) discloses a technique for achieving pulse energy exceeding 100 nJ, in which an optical modulator is arranged in a resonator, and ultrashort-pulsed light having high energy and high peak power is extracted from the resonator. (The above technique is called cavity dumping.) The use of the cavity dumping enables amplification of the energy of ultrashort-pulsed light without necessity of external arrangement of an amplification mechanism. However, the length of the resonator in a laser system disclosed in USP 20070104230 can be estimated as approximately 7 meters on the basis of the repetition rate indicated in USP 20070104230. That is, in order to realize the ultrashort-pulsed light having very high energy exceeding 100 nJ, the length of the resonator in USP 20070104230 is increased, and the resonator in the laser system disclosed in JP USP 20070104230 has a complex structure. In other words, according to the technique disclosed in USP 20070104230, it is impossible to achieve downsizing of the resonator, and overcome the problems of the output instability and the high cost.

Further laser apparatuses of interest are disclosed in US 2005/074038, US 2005/185682, and US 2009/086772.

As explained above, no ultrashort-pulsed laser apparatus which has been proposed until now can be formed in small size at low cost, and output with high stability ultrashort-pulsed light having the pulse energy on the order of several nanojoules to tens of nanojoules which can be used in biomachining.

### SUMMARY OF THE INVENTION

The present invention has been developed in view of the above circumstances.

The object of the present invention is to provide a mode-locked solid-state laser apparatus as an ultrashort-pulsed laser apparatus which can be formed in small size at low cost, and output with high stability ultrashort-pulsed light having high energy and high peak power which can be used in biomachining.

In order to accomplish the above object, the present invention is provided. According to the present invention, there is provided a mode-locked solid-state laser apparatus as defined in claim 1.

In the above description of the present invention, the resonator having a linear form means a resonator realized by only two resonator mirrors, and is hereinafter referred to as a linear resonator. The arrangement of the saturable absorber at one end of the resonator means that the saturable absorber also has the function of a resonator mirror.

Preferably, the mode-locked solid-state laser apparatus according to the present invention may also have one or any possible combination of the following additional features (i) to (ii).
(i) The resonator length of the resonator is preferably 150 mm or smaller, and more preferably 75 mm or smaller.
(ii) Preferably, the electro-optical modulator is realized by one of an SBN (strontium barium niobate) crystal and a KTN (potassium tantalate niobate) crystal.

Since the mode-locked solid-state laser apparatus according to the present invention has the cavity dumping mechanism in the linear resonator, which can be constructed in small size, the pulsed light oscillated in the resonator can be extracted without the passing through an output mirror. Therefore, the mode-locked solid-state laser apparatus according to the present invention can be constructed in small size at low cost, and output pulsed light having higher energy than the pulsed light outputted through a common output mirror, while maintaining the stability of the output.

### BRIEF DESCRIPTION OF THE DRAWINGS

FIG. 1 is a diagram schematically illustrating a mode-locked solid-state laser apparatus according to an example, not forming part of the invention.
FIG. 2 is a diagram schematically illustrating a mode-locked solid-state laser apparatus according to the present invention.

### DESCRIPTION OF PREFERRED EMBODIMENTS

The embodiments of the present invention are explained in detail below with reference to drawings.

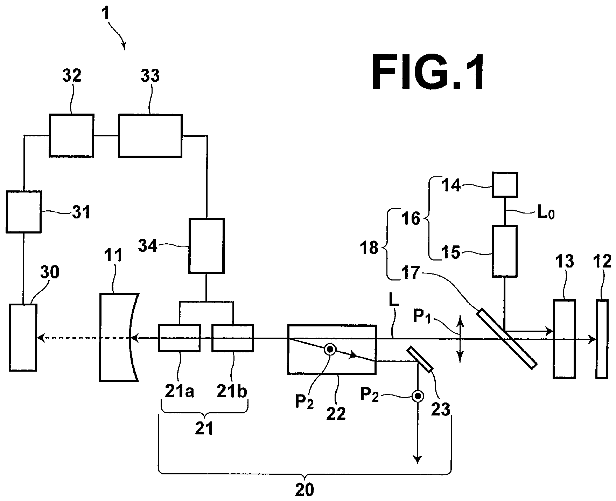

### 1. First Embodiment (FIG. 1)

### 1.1 Construction

The mode-locked solid-state laser apparatus according to an example, not falling under the present invention, is explained below with reference to FIG. 1, which is a schematic diagram of the mode-locked solid-state laser apparatus. The mode-locked solid-state laser apparatus 1 of FIG. 1 comprises a resonator mirror 11, an SESAM (semiconductor saturable absorbing mirror) 12, a solid-state laser medium 13, an excitation-light optical system 18, and a cavity dumping mechanism 20.

The resonator mirror 11 realizes an end of a resonator, and the SESAM 12 is a saturable absorber realizing the other end of the resonator. The solid-state laser medium 13 is arranged in the resonator. The excitation-light optical system 18 is constituted by an excitation-light injection optical unit 16 and a dichroic mirror 17. The excitation-light injection optical unit 16 includes a semiconductor laser 14 and a self-focusing lens 15. (The self-focusing lens 15 may be, for example, a selfoc® lens. Selfoc® is a registered trademark of Nippon Sheet Glass Company, Limited.) The semiconductor laser 14 emits excitation light (pumping light) L₀, and the excitation light L₀ is injected into the resonator through the self-focusing lens 15 along a direction intersecting the optical axis of the resonator. The dichroic mirror 17 is arranged in the resonator on the optical axis of the resonator, reflects toward the laser medium 13 the excitation light L₀ injected into the resonator (by the excitation-light injection optical unit 16 along the direction intersecting the optical axis of the resonator), and allows transmission, through the dichroic mirror 17, of pulsed light (oscillated laser light) L which oscillates in the resonator. The cavity dumping mechanism 20 extracts the pulsed light L from the resonator.

That is, the mode-locked solid-state laser apparatus 1 is configured so that the excitation light L₀ is injected by the excitation-light injection optical unit 16 into the resonator along the direction intersecting the optical axis of the resonator, and then the excitation light L₀ is reflected by the dichroic mirror 17 (which is arranged on the optical axis of the resonator) so that the excitation light L₀ is introduced into the solid-state laser medium 13. The dichroic mirror 17 reflects the excitation light L₀ at a high reflectance (for example, higher than 85%), and transmits the pulsed light L substantially without reflection (for example, with the reflectance lower than 0.5%). Therefore, the lowering of the laser oscillation efficiency associated with the insertion of the dichroic mirror 17 can be minimized. In addition, the excitation light source can be located closer to the solid-state laser medium than in the conventional optical system, so that the mode-locked solid-state laser apparatus 1 can be constructed in small size. The angle of incidence on the dichroic mirror 17 is preferably 45 degrees or the Brewster's angle. The dichroic coating should be designed according to the angle of incidence of the excitation light.

It is desirable that the resonator mirror 11 and the SESAM 12 be arranged so that the optical resonator length is 150 mm or smaller. When the optical resonator length is 150 mm or smaller, the instability of the laser output can be suppressed, and the output variations caused by mechanical variations can be suppressed to an ignorable level. It is more preferable that the resonator length be 75 mm or smaller.

Alternatively, both ends of the resonator may be realized by simple resonator mirrors, and the saturable absorber may be arranged in the resonator. However, it is more preferable to realize a resonator mirror by an SESAM as in the mode-locked solid-state laser apparatus 1 of FIG. 1 because the size of the laser apparatus can be reduced when a resonator mirror is realized by an SESAM.

In the mode-locked solid-state laser apparatus 1 of FIG. 1, the solid-state laser medium 13 is arranged in close vicinity to the SESAM 12 for the following reason. The linear resonator is constituted by the resonator mirror 11 and the SESAM 12, and the beam waist in the resonator is realized only in the SESAM 12. Therefore, if the distance between the solid-state laser medium and the SESAM increases, the beam diameter of the light in the solid-state laser medium can become too large to oscillate laser or to realize mode locking for pulse oscillation. Further, the solid-state laser medium 13 and the SESAM 12 may be arranged in contact with each other.

The solid-state laser medium 13 is not specifically limited, and various known solid-state crystals may be used. Specifically, the solid-state laser medium 13 may be Yb:KGW (KGd(WO₄)₂), Yb:KYW (KY (WO₄)₂), Yb: YAG (Y₃A₁₅O₁₂), Yb:Y₂O₃, Yb:Sc₂O₃, Yb:Lu₂O₃, Yb:GdCOB (Ca₄GdO(BO₃)₃), Yb:SYS (SrY4(SiO₄)₃), Yb:BOYS (Sr₃Y(BO₃)₃), Yb:YVO₄, Yb:GdVO₄, alexandrite (Cr:BeAl₂O₄), Cr:LiSAF (LiSrAlF₆), Cr:LiSGAF (LiSrGaF₆), Cr:LiCAF (LiCaAlF₆), Cr:forsterite (Mg₂SiO₄), Cr:YAG (Y₃A ₁₅O₁₂), Cr:Ca₂GeO₄, Ti:Al₂O₃, Nd:YVO₄, Nd:glass, Er:Yb:glass, or the like. For example, the oscillation wavelengths obtained by use of the respective crystals are: 1045 nm by Yb:KYW; 1030 nm to 1100 nm by Yb:YAG; 1000 nm or 1045 nm by Yb:KGW; 1075 nm by Yb:Y₂O₃; 1041 nm by Yb: Sc₂O₃; 1064 nm by Yb:YVO₄; and 1060 nm by Nd:glass. In addition, the oscillation wavelengths of 760 nm to 1000 nm can be obtained by use of Cr:LiSAF, Cr:LiCAF, alexandrite, and the like.

The cavity dumping mechanism 20 includes an electro-optical modulator 21 and a deflector 22 arranged in the resonator. The deflector 22 deflects the pulsed light to a direction intersecting the optical axis of the resonator after the polarization direction of the pulsed light is changed by the electro-optical modulator 21. The electro-optical modulator 21 is arranged so that a voltage can be applied to the electro-optical modulator 21 by a means 33 for applying a voltage. In addition, the cavity dumping mechanism 20 comprises a mirror 23 which reflects the pulsed light L deflected by the deflector 22.

The electro-optical modulator 21 in the present embodiment is realized by two crystals 21a and 21b having identical shapes and being arranged so that the crystal axes of the crystals 21a and 21b are perpendicular to each other so that the rotation of the polarization of the pulsed light (i.e., retardation of the pulsed light) which occurs when the voltage is not applied to the electro-optical modulator 21 is compensated for. Alternatively, even in the case where the electro-optical modulator 21 is realized by only one crystal, the rotation of the polarization of the pulsed light can be compensated for by applying a voltage to the crystal. The crystals constituting the electro-optical modulator 21 are preferably SBN (strontium barium niobate) crystals and KTN (potassium tantalate niobate) crystals.

The electro-optical modulator 21 in FIG. 1 does not rotate the polarization of the pulsed light when the voltage is not applied to the electro-optical modulator 21, and rotates the polarization of the pulsed light by 90 degrees when the pulsed light goes and returns through the electro-optical modulator 21 (i.e., when the pulsed light passes through the electro-optical modulator 21 twice) while the voltage is applied to the electro-optical modulator 21. Specifically, when the pulsed light having a first linear polarization P₁ in a first direction goes and returns through the electro-optical modulator 21 to which the voltage is applied, the first linear polarization P₁ is rotated by 90 degrees so that the pulsed light has a second linear polarization P₂ in a second direction perpendicular to the first direction. The deflector 22 does not act on light having the first linear polarization P₁ and transmits the light as is, and changes the path of light having the second linear polarization P₂ (perpendicular to the first linear polarization P₁).

The resonator mirror 11 transmits a very small portion of the pulsed light L. For example, the resonator mirror 11 has the transmittance of approximately 0.1%. In the configuration of FIG. 1, the pulsed light which passes through the resonator mirror 11 is detected and converted into an electric signal by a photodetector 30. The electric signal is used as a timing signal for applying the voltage to the electro-optical modulator 21.

The electric signal generated by the photodetector 30 undergoes frequency division by a frequency divider 31 and is delayed by a delay circuit 32 in order to generate the timing signal. The timing signal is inputted into a high-voltage pulse generator as the aforementioned means 33 for applying a voltage. The high-voltage pulse generator 33 generates a high-voltage pulse signal in synchronization with the timing signal. The high-voltage pulse signal passes through a phase matching circuit 34, and is then applied to the electro-optical modulator 21. The phase matching circuit 34 matches the phase of the high-voltage pulse signal with the electro-optical modulator 21.

### 1.2 Operation

The mode-locked solid-state laser apparatus 1 of FIG. 1 having the above construction operates as follows.

While the aforementioned voltage is not applied to the electro-optical modulator 21, excitation light L₀ is outputted from the semiconductor laser 14, and injected into the resonator through the self-focusing lens 15 along a direction intersecting the optical axis of the resonator (along the direction perpendicular to the optical axis of the resonator in the example of FIG. 1) . The excitation light L₀ is reflected by the dichroic mirror 17, and enters and excites the solid-state laser medium 13, so that light generated by the excitation is oscillated by the function of the resonator. In the example of FIG. 1, the beam waist of the oscillated laser light L oscillated in the resonator is realized only in the SESAM 12. Because of the mode locking operation, the oscillated laser light L repeats round-trip propagation in the resonator. Thereafter, when the pulsed light goes and returns through the electro-optical modulator 21 while the voltage is applied to the electro-optical modulator 21, the first linear polarization P₁ of the pulsed light is rotated by 90 degrees to the second linear polarization P₂ (perpendicular to the first linear polarization P₁). The deflector 22 acts on only the second linear polarization P₂ and deflects the pulsed light having the second linear polarization P₂ to a direction intersecting the optical axis of the resonator. The deflected pulsed light is reflected by the mirror 23, so that the pulsed light having the second linear polarization P₂ can be extracted from the resonator. The voltage is applied to the electro-optical modulator 21 at the timing based on the electric signal generated by the photodetector 30 when the photodetector 30 detects a portion of the oscillated laser light L which passes through the resonator mirror 11.

The mode-locked solid-state laser apparatus 1 according to the first embodiment is constructed with a small-sized stable resonator, and enables extraction of the pulsed light repeating round-trip propagation in the resonator, from the resonator without the passing through a resonator mirror. Therefore, the mode-locked solid-state laser apparatus 1 can output ultrashort-pulsed light having very great pulse energy.

### 1.3 Details of Example

Details of an example of the mode-locked solid-state laser apparatus 1 of FIG. 1 which has been produced by the present inventor are indicated below.

A high-reflection coating realizing the reflectance of 99.9% at the wavelength of 1064±5 nm is applied to a concave surface of the resonator mirror 11 on the inside of the resonator, and an antireflection coating realizing the transmittance of 99.9% or more at the wavelength of 1064±5 nm is applied to a flat surface of the resonator mirror 11 opposite to the concave surface. The curvature radius of the concave surface is 50 mm. The resonator mirror 11 is arranged at a distance of approximately 70 mm from the end surface of the SESAM 12.

The SESAM 12 used in this example is a SESAM being manufactured by BATOP Gmbh and having the modulation depth ΔR of 0.4%, the nonsaturable loss Rns of 0.2%, and the saturation fluence of 70 µJ/ cm².

The solid-state laser medium 13 used in this example is a Nd:YVO₄ crystal with the Nd concentration of 2% and the thickness of 1 mm. Antireflection coatings realizing the transmittance of 95% or more at the wavelength of 808±5 nm and the transmittance of 99. 9% or more at the wavelength of 1064±10 nm are applied to both end faces of the solid-state laser medium 13. Therefore, the center wavelength of the pulsed light L in this example is 1064 nm.

The semiconductor laser 14 used in this example is a semiconductor laser being manufactured by OPTOENERGY Inc., emitting laser light at the wavelength of 808 nm, and having the emission width of 50 µm and the maximum output power of 2 W.

The self-focusing lens 15 used in this example is a selfoc® lens having the length of 5.4 mm and the diameter of 1.8 mm, and antireflection coatings at the wavelength of 808 nm are applied to both end faces of the self-focusing lens 15.

A dichroic coating realizing the transmittance of 99.9% or more at the wavelength of 1064±10 nm and the reflectance of 95% or more for the light having the wavelength of 808±5 nm and the incident angle of 45 degrees is applied to a surface of the dichroic mirror 17 on which the excitation light is incident, and an antireflection coating realizing the transmittance of 99.9% or more for the light having the wavelength of 1064±10 nm and the incident angle of 45 degrees is applied to the opposite surface of the dichroic mirror 17. The dichroic mirror 17 is arranged in the resonator so that the above surfaces of the dichroic mirror 17 make an angle of 45 degrees with the optical axis of the resonator.

The crystals 21a and 21b constituting the electro-optical modulator 21 used in this example are SBN (strontium barium niobate) crystals having the thickness of 2 mm, the width of 2 mm, and the length of 7.5 mm, and are arranged so that the length direction of each crystal is aligned with the optical axis of the resonator, and the crystal axes (a-axes) of the SBN crystals 21a and 21b are oriented in directions different by 90 degrees. In addition, electrodes are formed by evaporation on two opposite side surfaces (being parallel to the optical axis of the resonator and having the dimensions of 2 X 7.5 mm) of each of the SBN crystals 21a and 21b, and the SBN crystals 21a and 21b are arranged to realize a half-wave voltage of approximately 54 volts (where the aforementioned voltage is applied in the direction of the a-axis.) Thus, the aforementioned retardation in the pulsed light can be compensated for by arranging the SBN crystals 21a and 21b having identical shapes so that the crystal axes (a-axes) of the SBN crystals 21a and 21b are oriented in the directions different by 90 degrees. Alternatively, even in the case where the electro-optical modulator 21 is realized by a single crystal, the retardation can be compensated for by applying a DC (direct current) voltage to the crystal. Further, antireflection coatings realizing the transmittance of 99.9% or more at the wavelength of 1064±5 nm are applied to the opposite end faces (having the dimensions of 2 mm X 2 mm and being perpendicular to the optical axis of the resonator) of the SBN crystals 21a and 21b.

The deflector 22 used in this example is a beam displacer constituted by a YVO₄ crystal. The YVO₄ crystal has the thickness of 3 mm, the width of 3 mm, and the length of 20 mm, and is arranged so that the length direction of each crystal is aligned with the optical axis of the resonator. In addition, antireflection coatings realizing the transmittance of 99.9% or more at the wavelength of 1064±5 nm are applied to the opposite end faces (having the dimensions of 3 mm X 3 mm and being perpendicular to the optical axis of the resonator) of the YVO₄ crystal. The deflector (beam displacer) 22 transmits p-polarized pulsed light (having the first linear polarization P₁) as is, and deflects s-polarized pulsed light (having the second linear polarization P₂).

The mirror 23 used in this example is made of a synthesized quartz having the thickness of 0.5 mm, the width of 5 mm, and the length of 5 mm. In addition, a high-reflection coating realizing the reflectance of 99.9% or more at the wavelength of 1064±5 nm is applied to a surface (having the dimensions of 5 mm X 5 mm) of the mirror 23. The mirror 23 is arranged so that the light deflected by the beam displacer 22 is incident on the mirror 23 and reflected by the mirror 23 in a desired direction.

The voltage applied to the SBN crystals 21a and 21b in this example is the pulsed voltage applied by the high-voltage pulse generator 33. In this example, the pulsed light which passes the resonator mirror 11 is converted into an electric signal by a high-speed PIN photodetector (as the aforementioned photodetector 30), and the electric signal undergoes frequency division in the 1/1000 frequency divider 31, so that the frequency of the electric signal is divided by 1000. The frequency-divided electric signal is delayed by the delay circuit 32, and supplied to the high-voltage pulse generator 33 as the timing signal. The high-voltage pulse generator 33 generates a high-voltage pulse signal in synchronization with the timing signal. The phase matching circuit 34 performs phase matching between the high-voltage pulse generator 33 and the electro-optical modulator 21, and thereafter the phase-matched high-voltage pulse signal is applied to the SBN crystals 21a and 21b. Thus, the polarization of the pulsed light passing through the SBN crystals 21a and 21b is rotated by 90 degrees. Then, the pulsed light is deflected by the deflector 22, and reflected by the mirror 23, so that the pulsed light is extracted from the resonator.

In the above example of the mode-locked solid-state laser apparatus 1, when the SBN crystals 21a and 21b are not driven (i.e., when the voltage is not applied to the SBN crystals 21a and 21b), ultrashort-pulsed light having the repetition frequency of 1.4 GHz, the average output power of 35 mW, the pulse energy of 0.025 nJ, the pulse width of 10 psec, and the center wavelength of 1064 nm has been detected through the resonator mirror 11 having the transmittance of 0.1%.

The ultrashort-pulsed light extracted by the cavity dumping mechanism 20 (i.e., reflected by the mirror 23) when the above ultrashort-pulsed light passing through the resonator mirror 11 is used as the timing signal and the SBN crystals 21a and 21b are driven (i.e., when the voltage is applied to the SBN crystals 21a and 21b) has been observed having the repetition frequency of 1.4 MHz, the average output power of 28 mW, the pulse width of 12 psec, and the pulse energy of 20 nJ.

As indicated above, according to the first embodiment, it is possible to obtain from the small-sized (palmtop-size) mode-locked solid-state laser apparatus ultrashort-pulsed light having pulse energy equivalent to the pulse energy (10 to 30 nJ) of the commercially available Ti: sapphire ultrashort-pulsed laser.

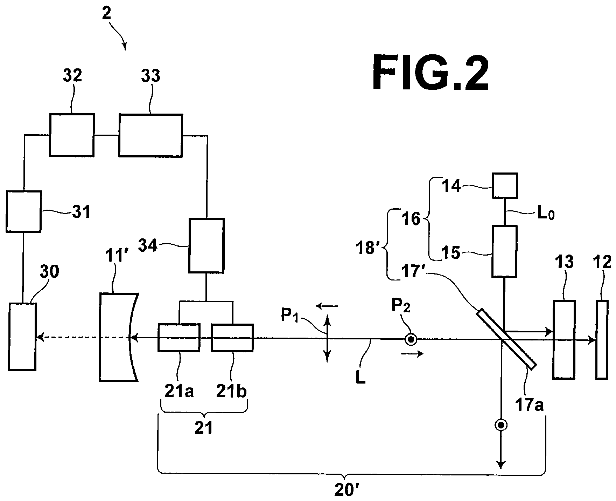

### 2. Second Embodiment (FIG. 2)

### 2.1 Construction

The mode-locked solid-state laser apparatus according to the present invention is explained below with reference to FIG. 2, which is a schematic diagram of the mode-locked solid-state laser apparatus. In FIG. 2, elements and constituents equivalent to the corresponding elements or constituents in the first example are indicated by the same reference numbers as the first example, and descriptions of the equivalent elements or constituents are not repeated in the following explanations unless necessary.

The mode-locked solid-state laser apparatus 2 according to the invention is different from the mode-locked solid-state laser apparatus 1 according to the first example in the construction of the cavity dumping mechanism. In the mode-locked solid-state laser apparatus 2, a dichroic mirror 17' constituting an excitation-light optical system 18' also has the function of a deflector constituting a cavity dumping mechanism 20', which deflects pulsed light oscillating in a resonator to a direction intersecting the optical axis of the resonator. That is, the dichroic mirror 17' transmits light having the first linear polarization P₁, and reflects light having the second linear polarization P₂. Since the dichroic mirror 17' has the function of a deflector, it is possible to reduce the number of components constituting the laser apparatus, and further reduce the size of the laser apparatus. Alternatively, it is possible to arrange in the resonator as a deflector a polarizing beam splitter which transmits light having the first linear polarization P₁ and reflects light having the second linear polarization P₂, instead of arranging for the above dichroic mirror to have the function of a deflector.

In addition, the mode-locked solid-state laser apparatus 2 according to the invention comprises a negative-dispersion mirror 11', which has the functions of a negative group-velocity dispersion compensator and a resonator mirror realizing an end of the resonator. The negative-dispersion mirror 11' imparts a predetermined negative group-velocity dispersion to light so that the total group-velocity dispersion of the light during a round trip of the light in the resonator becomes at most zero.

### 2.2 Operation

The mode-locked solid-state laser apparatus 2 of FIG. 2 having the above construction operates as follows.

While the aforementioned voltage is not applied to the electro-optical modulator 21, excitation light L₀ is outputted from the semiconductor laser 14, and injected into the resonator through the self-focusing lens 15 along a direction intersecting the optical axis of the resonator (along the direction perpendicular to the optical axis of the resonator in the example of FIG. 2) . The excitation light L₀ is reflected by the dichroic mirror 17', and enters and excites the solid-state laser medium 13, so that light generated by the excitation is oscillated by the function of the resonator. In the example of FIG. 2, the beam waist of the oscillated laser light L oscillated in the resonator is realized only in the SESAM 12. The combination of the negative group-velocity dispersion given by the resonator mirror 11' and the self-phase modulation occurring in the solid-state laser medium 13 enables round-trip propagation of the oscillated laser light L in the resonator. Specifically, the SESAM mirror 12 starts mode locking, and maintains and stabilizes pulses, soliton pulses are formed by keeping a balance between the group-velocity dispersion and the self-phase modulation, and the mode-locked pulses are steepened, so that generation of stable soliton pulses is enabled. Thereafter, when the pulsed light L goes and returns through the electro-optical modulator 21 while the voltage is applied to the electro-optical modulator 21, the first linear polarization P₁ of the pulsed light is rotated by 90 degrees to the second linear polarization P₂ (perpendicular to the first linear polarization P₁). The pulsed light having the second linear polarization P₂ is reflected by the dichroic mirror 17', so that the pulsed light having the second linear polarization P₂ can be extracted from the resonator.

Similar to the first embodiment, the mode-locked solid-state laser apparatus 2 according to the second embodiment is constructed with a small-sized stable resonator, and enables extraction of the pulsed light repeating round-trip propagation in the resonator, from the resonator without the passing through a resonator mirror or a negative-dispersion mirror. Therefore, the mode-locked solid-state laser apparatus 2 can output ultrashort-pulsed light having very great pulse energy.

### 2.3 Details of Example

Details of an example of the mode-locked solid-state laser apparatus 2 of FIG. 2 which has been produced by the present inventor are indicated below.

The negative-dispersion mirror 11' used in this example is a mirror in which a high-reflection coating imparting a negative group-velocity dispersion of -10000 fsec² to reflected light and realizing the reflectance of 99.9% at the wavelength of 1045±10 nm is applied to a concave surface of the negative-dispersion mirror 11' on the inside of the resonator, and an antireflection coating realizing the transmittance of 99.9% or more at the wavelength of 1045±10 nm is applied to a flat surface of the negative-dispersion mirror 11' opposite to the concave surface. The curvature radius of the concave surface is 50 mm. Since the negative-dispersion mirror 11' formed as above is used, it is possible to induce a type of mode locking called soliton mode locking, and obtain ultrashort-pulsed light on the order of femtoseconds. The negative-dispersion mirror 11' is arranged at a distance of approximately 70 mm from the end surface of the SESAM 12.

The SESAM 12 used in this example is a SESAM being manufactured by BATOP Gmbh and having the modulation depth ΔR of 0.4%, the nonsaturable loss Rns of 0.2%, and the saturation fluence of 70 µJ / cm2.

The solid-state laser medium 13 used in this example is a Yb:KYW crystal. Antireflection coatings realizing the transmittance of 95% or more at the wavelength of 980±5 nm and the transmittance of 99.9% or more at the wavelength of 1045±10 nm are applied to both end faces of the solid-state laser medium 13. The Yb:KYW crystal has a wider oscillation bandwidth than the Nd:YVO₄ crystal, and enables generation of ultrashort-pulsed light on the order of femtoseconds.

The semiconductor laser 14 used in this example is a semiconductor laser being manufactured by OPTOENERGY Inc., emitting laser light at the wavelength of 980 nm, and having the emission width of 50 µm and the maximum output power of 2.5 W. Therefore, the center wavelength of the excitation light L₀ in this example is 980 nm.

The self-focusing lens 15 used in this example is a selfoc® lens having the length of 5.4 mm and the diameter of 1.8 mm, and antireflection coatings at the wavelength of 980 nm are applied to both end faces of the self-focusing lens 15.

A dichroic coating realizing the transmittance of 99.9% or more at the wavelength of 1045±10 nm and the reflectance of 95% or more for the light having the wavelength of 980±5 nm and the incident angle of 45 degrees is applied to a surface of the dichroic mirror 17' on which the excitation light is incident, and another coating is applied to the opposite surface 17a of the dichroic mirror 17'. The coating on the surface 17a realizes the transmittance of 99.9% or more for the p-polarized light having the wavelength of 1045±10 nm and the first linear polarization P₁, and the reflectance of 95% or more for the s-polarized light having the wavelength of 1045±10 nm and the second linear polarization P₂.

Similar to the first embodiment, the crystals 21a and 21b constituting the electro-optical modulator 21 used in this example are SBN (strontium barium niobate) crystals having the thickness of 2 mm, the width of 2 mm, and the length of 7.5 mm, and are arranged so that the length direction of each crystal is aligned with the optical axis of the resonator, and the crystal axes (a-axes) of the SBN crystals 21a and 21b are oriented in directions different by 90 degrees. In addition, antireflection coatings realizing the transmittance of 99.9% or more at the wavelength of 1045±5 nm are applied to the opposite end faces (having the dimensions of 2 mm X 2 mm and being perpendicular to the optical axis of the resonator) of the SBN crystals 21a and 21b.

The voltage applied to the SBN crystals 21a and 21b in this example is the pulsed voltage applied by the high-voltage pulse generator 33. In this example, the pulsed light which passes the negative-dispersion mirror 11' is converted into an electric signal by a high-speed PIN photodetector (as the aforementioned photodetector 30), and the electric signal undergoes frequency division in the 1/1000 frequency divider 31, so that the frequency of the electric signal is divided by 1000. The frequency-divided electric signal is delayed by the delay circuit 32, and supplied to the high-voltage pulse generator 33 as the timing signal. The high-voltage pulse generator 33 generates a high-voltage pulse signal in synchronization with the timing signal. The phase matching circuit 34 performs phase matching between the high-voltage pulse generator 33 and the electro-optical modulator 21, and thereafter the phase-matched high-voltage pulse signal is applied to the SBN crystals 21a and 21b. Thus, the polarization of the pulsed light passing through the SBN crystals 21a and 21b is rotated by 90 degrees. Then, the pulsed light is reflected by the dichroic mirror 17', so that the pulsed light is extracted from the resonator.

In the above example of the mode-locked solid-state laser apparatus 2, when the SBN crystals 21a and 21b are not driven (i.e., when the voltage is not applied to the SBN crystals 21a and 21b), ultrashort-pulsed light having the repetition frequency of 1.65 GHz, the average output power of 30 mW, the pulse energy of 0.02 nJ, the pulse width of 500 fsec, and the center wavelength of 1045 nm has been detected through the negative-dispersion mirror 11'.

The ultrashort-pulsed light extracted by the cavity dumping mechanism 20' (i.e., reflected by the dichroic mirror 17') when the above ultrashort-pulsed light passing through the negative-dispersion mirror 11' is used as the timing signal and the SBN crystals 21a and 21b are driven (i.e., when the voltage is applied to the SBN crystals 21a and 21b) has been observed having the repetition frequency of 1.65 MHz, the average output power of 30 mW, the pulse width of 510 fsec, the pulse energy of 18 nJ, and the peak power of 36 kW.

### 3. Variations

The mode-locked solid-state laser apparatus according to the present invention is not limited to the above embodiments. In particular, the optical components constituting the cavity dumping mechanism and the arrangement of the optical components may be modified when necessary. For example, in the mode-locked solid-state laser apparatus 1 according to the first embodiment, the electro-optical modulator 21 may be arranged between the deflector 22 and the resonator mirror 11, although the deflector 22 is arranged between the electro-optical modulator 21 and the resonator mirror 11 in the mode-locked solid-state laser apparatus 1 illustrated in FIG. 1. In this case, the voltage applied to the electro-optical modulator 21 and the structure and the like of the electro-optical modulator 21 should be appropriately modified so that the polarization of the pulsed light is rotated by 90 degrees by only one passage of the pulsed light through the electro-optical modulator 21.

## Claims

1. A mode-locked solid-state laser apparatus (2) comprising:
a resonator having a linear form;
a solid-state laser medium (13) arranged in said resonator;
a saturable absorber (12) which is arranged at one end of said resonator for inducing mode locking and is a semiconductor saturable absorbing mirror,
an excitation optical system (18') configured to inject excitation light (L₀) into said solid-state laser medium (13) and including an excitation-light injection optical unit (16), configured to inject said excitation light (L₀) along a direction intersecting an optical axis of the resonator, and a dichroic mirror (17'), arranged on the optical axis, configured to reflect toward said solid-state laser medium (13) the excitation light (L₀) injected into the resonator and to allow transmission of pulsed light (L), oscillating in said resonator being linearly polarized in a first direction,
a cavity dumping mechanism (20'), configured to extract from said resonator the pulsed light (L) oscillating in the resonator and including
an electro-optical modulator (21), configured to change a direction of polarization of the pulsed light (L),
a negative group-velocity dispersion compensator (11') which is arranged at another end of said resonator and is a negative-dispersion mirror,
wherein said resonator is realized by the semiconductor saturable absorbing mirror and the negative-dispersion mirror,
wherein said electro-optical modulator (21) is configured to rotate, upon application of a voltage, a linear polarization of the pulsed light
(L) in the first direction by 90 degrees so that the pulsed light (L) changes the linear polarization to a second direction which is
perpendicular to the first direction, and
wherein said dichroic mirror (17') also has the function of a deflector configured to deflect, by reflection, light linearly polarized in said second direction to a direction intersecting an optical axis of the resonator after the pulsed light (L) undergoes said change of direction of polarization by the electro-optical modulator (21).

2. A mode-locked solid-state laser apparatus according to claim 1, wherein said resonator has a resonator length of 150 mm or smaller.

3. A mode-locked solid-state laser apparatus according to either of claims 1 to 2, wherein said electro-optical modulator (21) is realized by one of a strontium barium niobate, SBN, crystal and a potassium tantalate niobate, KTN, crystal.

## Patentansprüche

1. Modengekoppelte Festkörper-Laservorrichtung (2) umfassend:
einen Resonator, der eine lineare Form aufweist;
ein Festkörper-Lasermedium (13), das in dem Resonator angeordnet ist;
einen sättigbaren Absorber (12), der an einem Ende des Resonators angeordnet ist, zum Induzieren von Modenkopplung, und der ein Halbleiterspiegel mit sättigbarer Absorption ist,
ein optisches Anregungssystem (18'), das eingerichtet ist Anregungslicht (L₀) in das Festkörper-Lasermedium (13) zu injizieren, und der eine optische Anregungslicht-Injektionseinheit (16) umfasst, das eingerichtet ist das Anregungslicht (L₀) entlang einer Richtung, die eine optische Achse des Resonators schneidet, zu injizieren, und einen dichroischen Spiegel (17'), der auf der optischen Achse angeordnet ist und eingerichtet, ist das in den Resonator injizierte Anregungslicht (L₀) zu dem Festkörper-Lasermedium (13) zu reflektieren und die Transmission von gepulstem Licht (L), das in dem Resonator oszilliert und in einer ersten Richtung linear polarisiert ist, zu gestatten,
einen Cavity-Dumping-Mechanismus (20'), der eingerichtet ist, das in dem Resonator oszillierende gepulste Licht (L) aus dem Resonator zu extrahieren, und umfasst:
einen elektrooptischen Modulator (21), der eingerichtet ist eine Polarisationsrichtung des gepulsten Lichts (L) zu verändern,
einen Negative-Gruppengeschwindigkeits-Dispersionskompensator (11'), der an einem anderen Ende des Resonators angeordnet ist und ein Negativ-Dispersionsspiegel ist,
wobei der Resonator durch den Halbleiterspiegel mit sättigbarer Absorption und den Negativ-Dispersionsspiegel realisiert ist,
wobei der elektrooptische Modulator (21) eingerichtet ist bei Beaufschlagung einer Spannung eine lineare Polarisation des gepulsten Lichts (L) in der ersten Richtung um 90 Grad zu rotieren, so dass das gepulste Licht (L) die lineare Polarisation in eine zweite Richtung ändert, die senkrecht zu der ersten Richtung ist, und
wobei der dichroische Spiegel (17') auch die Funktion eines Deflektors hat, der eingerichtet ist, durch Reflexion Licht, das in der zweiten Richtung polarisiert ist, in eine Richtung abzulenken, die eine optische Achse des Resonators schneidet, nachdem das gepulste Licht (L) die Polarisations-Richtungsänderung durch den elektrooptischen Modulator (21) durchlaufen hat.

2. Modengekoppelte Festkörper-Laservorrichtung nach Anspruch 1, wobei der Resonator eine Resonatorlänge von 150 mm oder weniger aufweist.

3. Modengekoppelte Festkörper-Laservorrichtung nach einem der Ansprüche 1 bis 2, wobei der elektrooptische Modulator (21) durch entweder einen Strontium-Barium-Niobat-SBN-Kristall oder ein Kalium-Tantalat-Niobat-KTN-Kristall realisiert ist.

## Revendications

1. Appareil à laser à solide et à modes synchronisés (2), comprenant :
un résonateur se présentant sous une forme linéaire ;
un milieu de laser à solide (13) agencé dans ledit résonateur ;
un absorbeur saturable (12), lequel est agencé sur une extrémité dudit résonateur pour induire une synchronisation des modes et est un miroir absorbant saturable à semi-conducteur,
un système optique d'excitation (18') configuré pour injecter une lumière d'excitation (L₀) dans ledit milieu de laser à solide (13) et incluant une unité optique d'injection de lumière d'excitation (16), configuré pour injecter ladite lumière d'excitation (L₀) le long d'une direction croisant un axe optique du résonateur, et un miroir dichroïque (17'), agencé sur l'axe optique, configuré pour réfléchir vers ledit milieu de laser à solide (13) la lumière d'excitation (L₀) injectée dans le résonateur et pour permettre une transmission de lumière pulsée (L), oscillant dans ledit résonateur polarisé de manière linéaire dans une première direction ;
un mécanisme de vidage de cavité (20'), configuré pour extraire dudit résonateur la lumière pulsée (L) oscillant dans le résonateur et incluant un modulateur électro-optique (21), configuré pour modifier une direction de polarisation de la lumière pulsée (L),
un compensateur de dispersion de vitesse de groupe négative (11'), lequel est agencé sur une autre extrémité dudit résonateur et est un miroir de dispersion négative ;
dans lequel ledit résonateur est réalisé par le miroir absorbant saturable à semi-conducteur et le miroir à dispersion négative ;
dans lequel ledit modulateur électro-optique (21) est configuré pour faire tourner, suite à l'application d'une tension, une polarisation linéaire de la lumière pulsée (L) dans la première direction de 90 degrés, de sorte que la lumière pulsée (L) modifie la polarisation linéaire sur une seconde direction, laquelle est perpendiculaire à la première direction, et
dans lequel ledit miroir dichroïque (17') présente également la fonction d'un déflecteur configuré pour dévier, par réflexion, une lumière polarisée de manière linéaire dans ladite seconde direction vers une direction croisant un axe optique du résonateur après soumission de la lumière pulsée (L) à ladite modification de direction de polarisation par le modulateur électro-optique (21).

2. Appareil à laser à solide et à modes synchronisés selon la revendication 1, dans lequel ledit résonateur présente une longueur de résonateur inférieure ou égale à 150 mm.

3. Appareil à laser à solide et à modes synchronisés selon l'une quelconque des revendications 1 à 2, dans lequel ledit modulateur électro-optique (21) est réalisé par un élément parmi un cristal de niobate de strontium et de baryum, SBN, et un cristal de niobatetantalate de potassium, KTN.
